# EUROPEAN PATENT SPECIFICATION

(11) **EP 1 193 686 B1**
(45) Date of publication and mention of the grant of the patent: **21.05.2003**
(21) Application number: 00121468.3
(22) Date of filing: 29.09.2000
(51) Int. Cl.: G10L 15/04, G10L 15/26

(54) **Method and device for analyzing a spoken sequence of numbers**
Verfahren und Einrichtung zur Analyse einer Folge von gesprochenen Nummern
Méthode et dispositif d'analyse d' une séquence vocale de nombres

(43) Date of publication of application: 03.04.2002
(73) Proprietor: TELEFONAKTIEBOLAGET LM ERICSSON (publ), 126 25 Stockholm (SE)
(72) Inventor: Klisch, Rainer, 90419 Nürnberg (DE); Schleifer, Ralph, 91257 Pegnitz (DE); Kiessling, Andreas, 91080 Marloffstein (DE); Springer, Volker, 90429 Nürnberg (DE)
(74) Representative: Schmidt, Steffen J., Dipl.-Ing.

(56) References cited:
- EP-A- 0 508 225
- EP-A- 0 770 986
- WO-A-89/04035
- US-A- 4 336 421
- LEA W A: "An approach to syntactic recognition without phonemics" IEEE TRANSACTIONS ON AUDIO AND ELECTROACOUSTICS, JUNE 1973, USA, vol. AU-21, no. 3, pages 249-258, XP002158176 ISSN: 0018-9278

## Description

### BACKGROUND OF THE INVENTION

### Technical Field

The invention relates to a method and a device for analyzing a spoken sequence of numbers.

### Discussion of the Prior Art

A lot of technical applications require recognition of a spoken sequence of numbers. Many mobile telephones comprise the feature of voice dialing by uttering a telephone number. Moreover, electronic commerce applications require the recognition of spoken order numbers and spoken credit card numbers.

WO-A-89 04035 discloses a method for recognizing a number like a telephone number consisting of a plurality of digits. The digits are uttered singly or in sequences. Two utterances comprising one or more digits may be separated by the user-defined placement of pauses. A pause time between two utterances is monitored and when an utterance is followed by a pre-determined pause time interval, the recognized digits will be replied via a speech synthesizer. A further utterance comprising one or more digits can then be started, and only the next utterance will be replied after a subsequent pause.

While recognition of spoken digits and spoken digit sequences works reliably also under adverse noise conditions, automatic recognition of naturally spoken numbers like "twenty two" or "five hundred thirty" is more difficult. This is due to the fact that spoken sequences of numbers like "twenty two" or "five hundred thirty" can stand for more than one numerical value. The spoken sequence of numbers "twenty two", for example, can stand either for the single numerical value "22" or for the two numerical values "20" and "2". As another example, the sequence "five hundred thirty" can stand both for the numerical value "530" or for the two numerical values "500" and "30".

When automatically recognizing a spoken sequence of numbers, the recognition process becomes increasingly difficult if numbers with a large numerical value or a large sequence of numbers have to be analyzed. Thus, the spoken sequence of numbers "thousand four hundred fifty six" can stand for a single numerical value or for up to five numerical values. Altogether, there exist eight possibilities: "1456", "1000" and "4" and "100" and "50" and "6", "1000" and "456", "1000" and "400" and "56", "1000" and "400" and "50" and "6", "1400" and "56", "1400" and "50" and "6", "1450" and "6".

These ambiguities do not only occur in the English language. In the German language , for example, the naturally spoken sequence of numbers "einhundert zehn" can stand both for the single numerical value "110" and the two numerical values "100" and "10". However, the ambiguities relating to the one or more numerical values of a spoken sequence of numbers may be different in different languages. While e. g. in the French language "quarante sept" can stand for both the single numerical value "47" or the two numerical values "40" and "7", this ambiguity does not occur in the German language. In the German language the numerical value "47" is spoken as "siebenundvierzig" and the sequence of the two numerical values "40" and "7" is spoken as "vierzig sieben".

There is, therefore, a need for a method and device for analyzing a spoken sequence of numbers which allow a robust distinction between different semantic interpretations with respect to the one or more numerical values comprised therein.

### SUMMARY OF THE INVENTION

The present invention satisfies this need by providing a method for analyzing a spoken sequence of numbers, wherein the numbers are recognized by automatic speech recognition and wherein the method comprises determining a pause length between two consecutive numbers and deciding whether or not the two consecutive numbers belong to a single numerical value on the basis of the determined pause length. A device for analyzing a spoken sequence of numbers comprises an automatic speech recognizer, a prosodic unit for determining a pause length between two consecutive numbers and a processing unit for deciding whether or not the two consecutive numbers belong to a single numerical value on the basis of the determined pause length.

According to the invention, the speaking pause length between two consecutively spoken numbers is used as the single prosodic criterion or as one of a plurality of prosodic criteria for assessing whether or not the two consecutively spoken numbers belong to a single numerical value or to two different numerical values. The speaking pause length is a robust prosodic criterion for analyzing a spoken sequence of numbers. Further prosodic parameters apart from the speaking pause length on which the decision whether or not two consecutively spoken numbers belong to a single numerical value can be based are known from E. Nöth et al "Prosodische Information: Begriffsbestimmung und Nutzen für das Sprachverstehen", in Paulus, Wahl (ed.), Mustererkennung 1997, Informatik aktuell, Springer-Verlag, Heidelberg, 1997, pages 37-52.

The decision whether or not two consecutively spoken numbers belong to a single numerical value can be a "hard" decision or a "soft" decision. The "hard" decision can be based on determining whether or not certain thresholds of prosodic parameters have been exceeded. A "soft" decision may be made by means of a so-called classifier, e.g. a neuronal network, which takes into account a plurality of prosodic parameters and which produces e.g. a propability decision.

According to a preferred embodiment of the invention, it is automatically decided that two consecutive numbers do not belong to a single numerical value if a certain pause length threshold is exceeded. Such a mechanism corresponds to the acoustical perception of a human listener. The two spoken numbers "20" and "2" e. g. will clearly be perceived by the human listener as two separate numerical values (i. e. "20" and "2") if a speaking pause of sufficient duration is made between speaking the numbers "20" and "2". On the other hand, the spoken numbers "20" and "2" will be perceived as a single numerical value (i. e. "22") if no or almost no speaking pause is made.

The speaking pause length threshold which forms the basis for the decision whether or not two consecutive numbers belong to a single numerical value can initially be set to a certain value. This value can be an empirical value estimated on the basis of a representative speech database. The pause length threshold can also be adjustable. This allows a user to adapt the speaking pause length threshold to his own manner-of-speaking, e. g. by changing the threshold value in system settings of the device.

It has been found that robust setting of a pause length threshold is strongly interrelated with speech tempo which in turn depends on the individual speaker. In reality, the speech tempo of different speakers can vary within a wide range. According to a preferred embodiment of the invention, the pause length threshold is therefore automatically adapted to the current user's speaking habit. This can e. g. be done by analyzing previously determined speaking pause lengths within one or more previously uttered numerical values which the user has already acknowledged to be correct. A new pause length threshold can then either be set to the mean or the median computed over these previously determined speaking pause lengths or it can be set anywhere between the old threshold and the mean or median value of the previously determined speaking pause lengths. In other words: the pause length threshold is shifted.

The decision whether or not two consecutively spoken numbers belong to a single numerical value can be made more robust if the decision is not only based on the speaking pause length but also on the previously mentioned further prosodic parameters apart from the speaking pause length. These further prosodic parameters can relate to a phoneme duration like phrase-final lengthening or pre-boundary lengthening, the shape of the energy contour or specific pitch movements like phrase-final fall. Preferably, respective thresholds are also provided for these further prosodic parameters. The decision whether or not two consecutive numbers belong to a single numerical value can accordingly also be based on the criterion whether or not a respective threshold of a further prosodic parameter has been exceeded.

Like the pause length threshold, the respective thresholds of further prosodic parameters can be user-adjustable or be automatically adjusted dependent on the user's speaking habit or be adjusted in accordance with appropriate training data. Moreover, previously determined further prosodic parameters of previously uttered numerical values which the user has already acknowledged to be correct can be used for shifting respective thresholds of the prosodic parameters.

In many languages, connecting words between two consecutive numbers of a spoken sequence of numbers indicate that the two consecutive numbers belong to one numerical value. In the English language, e. g., such a connecting word is the word "and". Thus, the spoken sequence of numbers "one hundred and ten" usually stands for the numerical value "110", even if the total pause length between "hundred" and "ten", the pause length between "hundred" and "and" or the pause length between "and" and "ten" exceeds a previously set pause length threshold.

In order to correctly analyze a spoken sequence of numbers comprising one or more connecting words between two consecutive numbers, a preferred embodiment of the invention comprises the feature of recognizing such a connecting word. According to a first variant of the invention, it is determined that two consecutive numbers belong to a single numerical value every time a connecting word is arranged between the two numbers.

According to a second variant, upon recognition of a connecting word between two consecutive numbers, the pause length threshold for determining whether or not the two consecutive numbers belong to a single numerical value is changed. In other words: upon recognition of a connecting word, the decision whether or not two consecutive numbers belong to a single numerical value is based on a different pause length threshold as in case no such connecting word is recognized. Consequently, two different pause length thresholds are utilized. Analyzing a spoken sequence of numbers thus becomes more robust because in certain cases the consecutive numbers belong to different numerical values although a connecting word is arranged therebetween, especially in cases where the pause length between the two consecutive numbers is extremely long (e. g. when a user places long pauses between the connecting word and the number preceding or following the connecting word).

There exist several possibilities for determining a speaking pause length between two consecutive numbers of a spoken sequence of numbers. The pause length can e. g. be directly determined by measuring a silence interval between two consecutively spoken numbers. This can be done with a so-called voice activity detector. A speaking pause length can also be determined indirectly using the information obtained as a byproduct from the process of automatic speech recognition. During automatic speech recognition not only the words themselves but also their respective start and end points on a time axis are computed. The pause length can thus be determined based on an end point of the first of two consecutive numbers and a starting point of a second of two consecutive numbers. Especially in noisy environments, this technique usually leads to more robust results than measuring a silence interval between two consecutive numbers.

### BRIEF DESCRIPTION OF THE DRAWINGS

Further aspects and advantages of the invention will become apparent upon reading the following detailed description of preferred embodiments of the invention and upon reference to the drawings in which:
- Fig. 1: is a schematic diagram of a device for analyzing a spoken sequence of numbers according to the invention; and
- Fig. 2: is a schematic diagram of a method for analyzing a spoken sequence of numbers according to the invention.

### DESCRIPTION OF THE PREFERERD EMBODIMENTS

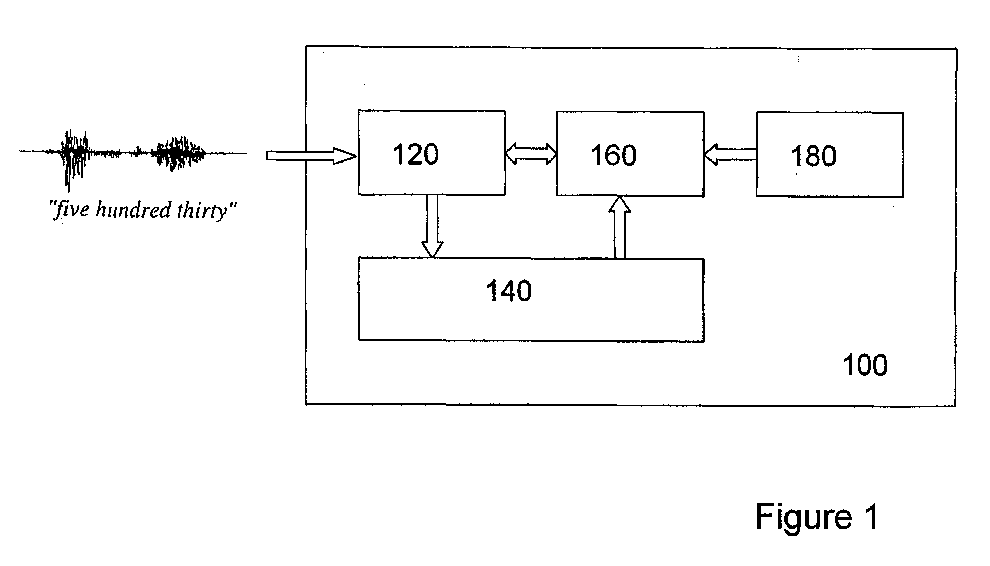

In Fig. 1, a schematic diagram of a device 100 for analyzing a spoken sequence of numbers according to the invention is illustrated. The analyzing device 100 depicted in Fig. 1 comprises an automatic speech recognizer 120, a prosodic unit 140 for determining a pause length between two consecutive numbers, a processing unit 160 for deciding if the two consecutive numbers belong to a single numerical value and an input unit 180.

Upon speaking a sequence of numbers like "five hundred thirty", the automatic speech recognizer 120 recognizes each of the spoken numbers as well as connecting words comprised within the spoken sequence of numbers. During the recognition process, the starting and end points in time of the recognized numbers and connecting words are computed. These starting and end points are output to the prosodic unit 140 for determining the pause length between two consecutive numbers or between a connecting word and a preceding or subsequent number.

The processing unit 160 receives input from both the automatic speech recognizer 120 and the prosodic unit 140. Based on the numbers recognized by the automatic speech recognizer 120, the presence of connecting words between two consecutive numbers and the pause length between two consecutive numbers or a connecting word and a number preceding or following the connecting word, the processing unit 160 analyzes the spoken sequence of numbers with respect to the one or more numerical values contained therein.

The processing unit 160 decides whether or not two consecutive numbers belong to a single numerical value on the basis of a pause length threshold. This pause length threshold is initially set to a value between 100 ms and 1 s, preferably to a value of 200 ms.

By means of an input unit 180 a user has the possibility to adapt this initial threshold to his own manner-of-speaking. The input unit 180 comprises a graphical or physical slide bar allowing to adjust the threshold within a predetermined range. The input unit 180 also allows selection of an automatic adaptation of the threshold to the speaking habit of one or more users of the device 100.

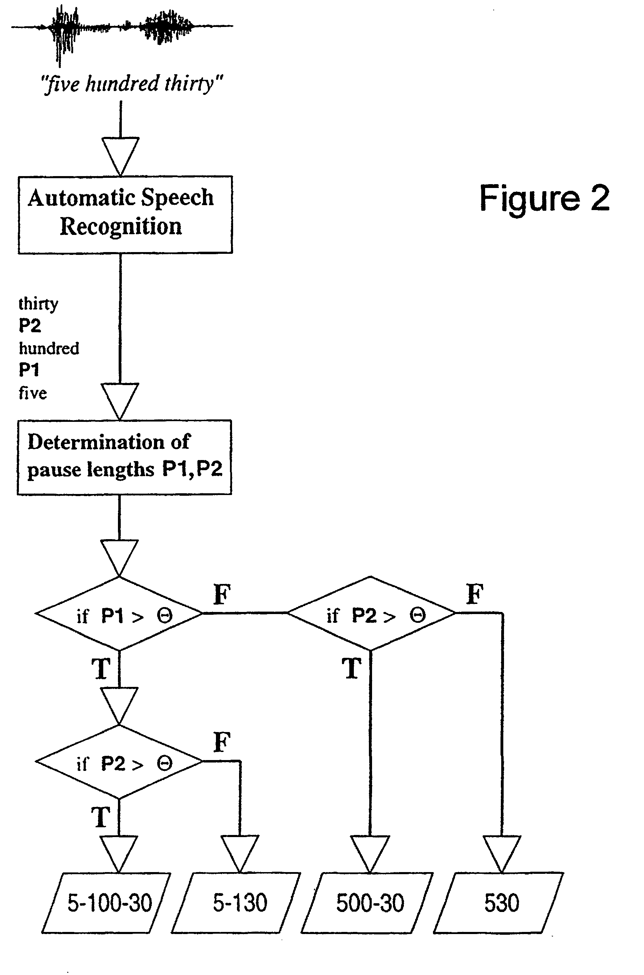

The function of the device 100 is hereinafter described in more detail with reference to Fig. 2.

First of all, a pause length threshold Θ is set automatically or by the user or according to appropriate training data to a certain value. Then, the user speaks the sequence "five hundred thirty" consisting of the three numbers "five", "hundred" and "thirty". These spoken numbers are subjected to automatic speech recognition in the automatic recognizer 120. The automatic speech recognizer 120 recognizes the three numbers "five", "hundred" and "thirty" with their respective starting and end points. The detection of the respective starting and end points indicates that there is a first pause between the first number "five" and the second number "hundred" and a second pause between the second number "hundred" and the third number "thirty".

The starting and end points of the three numbers are input to the prosodic unit 140 which determines a pause length P1 of the first pause as well as a pause length P2 of the second pause. The three numbers recognized by the automatic speech recognizer 120 and the two pause lengths P1 and P2 determined by the prosodic unit 140 are input to the processing unit 160 which decides if two consecutive numbers belong to a single numerical value on the basis of the measured pause lengths P1 and P2.

If both the pause length P1 and the pause length P2 exceed the pause length threshold Θ, the processing unit 160 decides that the spoken sequence of numbers contains three numerical values, i. e. "5", "100" and "30". If neither of the two pause lengths P1 and P2 exceeds the pause length threshold Θ, the processing unit 160 decides that the spoken sequence of numbers contains a single numerical value, i. e. "530".

If the processing unit 160 determines that only the first pause length P1 exceeds the pause length threshold Θ, it decides that the spoken sequence of numbers contains the two numerical values "5" and "130". On the other hand, if only the second pause length P2 exceeds the pause length threshold Θ, the processing unit 160 decides that the spoken sequence of numbers contains the two numerical values "500" and "30".

According to the method depicted in Fig. 2, the pause length P1 is determined prior to the pause length P2. This allows to analyze the spoken sequence of numbers in the order the numbers are spoken. Of course, the pause lengths P1 and P2 may also be determined and analyzed in a different order. This may necessitate that all numbers of the sequence of numbers have to be spoken prior to the analyzing step.

Although the method depicted in Fig. 2 relates to a decision which is solely based on the determined pause length, the prosodic unit 140 depicted in Fig. 1 may also determine further prosodic parameters apart from the pause length and the decision may also be based on these further prosodic parameters. Besides, the automatic speech recognizer 120 may also recognize connecting words within a spoken sequence of numbers and the processing unit 160 may, upon recognition of a connecting word, apply a different threshold regarding the one or more prosodic parameters on which the decision is based. Also, the decision can be based solely on one or more prosodic parameters apart from the pause length.

The device 100 and the method according to the invention may be used for many applications, e. g. stationary electronic commerce systems or mobile applications like mobile telephones.

## Claims

1. A method for analyzing a spoken sequence of numbers recognized by automatic speech recognition, comprising:
- determining a speaking pause length between two consecutive numbers; and
- deciding whether or not the two consecutive numbers belong to a single numerical value on the basis of the determined pause length.

2. The method according to claim 1, further comprising determining one or more further prosodic parameters apart from the pause length and deciding whether or not the two consecutive numbers belong to a single numerical value based also on the one or more further prosodic parameters.

3. The method according to claim 1 or 2, wherein the decision is based on a threshold of the pause length and/or of the one or more further prosodic parameters.

4. The method according to claim 3, wherein the threshold is initially set to an empirical value.

5. The method according to claim 3 or 4, wherein the threshold is user-adjustable.

6. The method according to claim 3 or 4, wherein the threshold is automatically adjusted dependent on a user's speaking habit or dependent on appropriate training data.

7. The method according to one of claims 2 to 6, wherein the threshold of the pause length and/or of the further prosodic parameters is shifted on the basis of one or more previously determined pause lengths and/or previously determined further prosodic parameters relating to one or more correctly determined numerical values.

8. The method according to one of claims 1 to 7, wherein the pause length is determined by measuring a silence interval between two consecutive numbers.

9. The method according to one of claims 1 to 7, further comprising obtaining an end point of a first of the two consecutive numbers and a starting point of a second of the two consecutive numbers during automatic speech recognition and determining the pause length based on the end point and the starting point.

10. The method according to one of claims 1 to 9, further comprising recognizing a connecting word within the spoken sequence of numbers.

11. The method according to claim 10, wherein, upon recognition of a connecting word, the decision whether or not two consecutive numbers belong to a single numerical value is based on a different pause length threshold.

12. A device (100) for analyzing a spoken sequence of numbers comprising:
- an automatic speech recognizer (120);
- a prosodic unit (140) for determining a speaking pause length between two consecutive numbers; and
- a processing unit (160) for deciding whether or not the two consecutive numbers belong to a single numerical value on the basis of the determined pause length.

13. The device according to claim 12, wherein the prosodic unit (140) determines one or more further prosodic parameters apart from the speaking pause length and wherein the processing unit (160) decides whether or not the two consecutive numbers belong to a single numerical value based also on the one or more further prosodic parameters.

14. The device according to claim 12 or 13, wherein the automatic speech recognizer (120) recognizes a connecting word between the spoken sequence of numbers.

## Patentansprüche

1. Verfahren zum Analysieren einer gesprochenen Sequenz von Nummern, die mittels automatischer Spracherkennung erkannt wurden, umfassend:
- Ermitteln einer Sprechpausenlänge zwischen zwei aufeinanderfolgenden Nummern; und
- Entscheiden, ob die beiden aufeinanderfolgenden Nummern zu einem einzigen numerischen Wert gehören oder nicht auf der Grundlage der ermittelten Pausenlänge.

2. Verfahren nach Anspruch 1, weiter umfassend das Ermitteln eines oder mehrerer weiterer prosodischer Parameter abgesehen von der Pausenlänge und Entscheiden, ob die beiden aufeinanderfolgenden Nummern zu einem einzigen numerischen Wert gehören oder nicht auf der Grundlage auch des einen oder der mehreren weiteren prosodischen Parameter.

3. Verfahren nach Anspruch 1 oder 2, **dadurch gekennzeichnet, dass** die Entscheidung auf einem Schwellenwert der Pausenlänge und/oder des einen oder der mehreren prosodischen Parameter basiert.

4. Verfahren nach Anspruch 3, **dadurch gekennzeichnet, dass** der Schwellenwert anfänglich auf einen empirischen Wert gesetzt ist.

5. Verfahren nach Anspruch 3 oder 4, **dadurch gekennzeichnet, dass** der Schwellenwert von einem Benutzer einstellbar ist.

6. Verfahren nach Anspruch 3 oder 4, **dadurch gekennzeichnet, dass** der Schwellenwert automatisch in Abhängigkeit von der Sprechgewohnheit eines Benutzers oder in Abhängigkeit von geeigneten Übungsdaten eingestellt wird.

7. Verfahren nach einem der Ansprüche 2 bis 6, **dadurch gekennzeichnet, dass** der Schwellenwert der Pausenlänge und/oder der weiteren prosodischen Parameter basierend auf einer oder mehreren vorher ermittelten Pausenlängen und/oder vorher ermittelten weiteren prosodischen Parameter, die sich auf einen oder mehrere korrekt ermittelte numerische Werte beziehen, geändert wird.

8. Verfahren nach einem der Ansprüche 1 bis 7, **dadurch gekennzeichnet, dass** die Pausenlänge durch Messen eines Stille-Intervalls zwischen zwei aufeinanderfolgenden Nummern ermittelt wird.

9. Verfahren nach einem der Ansprüche 1 bis 7, weiter umfassend das Erhalten eines Endpunkts einer ersten der beiden aufeinanderfolgenden Nummern und eines Anfangspunkts einer zweiten der beiden aufeinanderfolgenden Nummern während der automatischen Spracherkennung und das Ermitteln der Pausenlänge basierend auf dem Endpunkt und dem Anfangspunkt.

10. Verfahren nach einem der Ansprüche 1 bis 9, weiter umfassend das Erkennen eines Verbindungsworts innerhalb der gesprochenen Sequenz von Nummern.

11. Verfahren nach Anspruch 10, **dadurch gekennzeichnet, dass** dann, wenn ein Verbindungswort erkannt wird, die Entscheidung, ob die zwei aufeinanderfolgenden Nummern zu einem einzigen numerischen Wert gehören oder nicht auf einem anderen Pausenlängen-Schwellenwert basiert.

12. Vorrichtung (100) zum Analysieren einer gesprochenen Sequenz von Nummern, umfassend:
- einen automatischen Spracherkenner (120);
- eine prosodische Einheit (140) zum Ermitteln einer Sprechpausenlänge zwischen zwei aufeinanderfolgenden Nummern; und
- eine Verarbeitungseinheit (160) zum Entscheiden, ob die beiden aufeinanderfolgenden Nummern zu einem einzigen numerischen Wert gehören oder nicht basierend auf der ermittelten Pausenlänge.

13. Vorrichtung nach Anspruch 12, **dadurch gekennzeichnet, dass** die prosodische Einheit (140) einen oder mehrere weitere prosodische Parameter abgesehen von der Sprechpausenlänge ermittelt und dass die Verarbeitungseinheit (160) auch basierend auf dem einen oder den mehreren weiteren prosodischen Parametern entscheidet, ob die beiden aufeinanderfolgenden Nummern zu einem einzigen numerischen Wert gehören oder nicht.

14. Vorrichtung nach Anspruch 12 oder 13, **dadurch gekennzeichnet**, das der automatische Spracherkenner (120) ein Verbindungswort zwischen der gesprochenen Sequenz von Nummern erkennt.

## Revendications

1. Méthode d'analyse d'une séquence vocale de nombres reconnus par reconnaissance vocale automatique, comprenant:
- la détermination de la longueur d'une pause vocale entre deux nombres consécutifs, et
- la décision de l'appartenance ou de la non-appartenance des deux nombres consécutifs à une valeur numérique unique sur la base de la longueur déterminée de la pause.

2. Méthode selon la revendication 1, comprenant en outre la détermination d'un ou de plusieurs paramètres prosodiques, abstraction faite de la longueur de la pause, et la décision de l'appartenance ou de la non-appartenance des deux nombres consécutifs à une valeur numérique unique basée également sur un ou plusieurs autres paramètres prosodiques.

3. Méthode selon la revendication 1 ou 2, dans laquelle la décision est basée sur un seuil de longueur de la pause et/ou de l'un ou de plusieurs des autres paramètres prosodiques.

4. Méthode selon la revendication 3, dans laquelle le seuil est fixé initialement à une valeur empirique.

5. Méthode selon la revendication 3 ou 4, dans laquelle le seuil est réglable par l'utilisateur.

6. Méthode selon la revendication 3 ou 4, dans laquelle le seuil est réglé automatiquement en fonction des habitudes vocales d'un utilisateur ou en fonction de données d'apprentissage appropriées.

7. Méthode selon l'une des revendications 2 à 6, dans laquelle le seuil de la longueur de la pause et/ou des autres paramètres prosodiques est déplacé sur la base d'une ou de plusieurs longueurs de pause déterminées auparavant et/ou d'autres paramètres prosodiques déterminés auparavant relatifs à une ou plusieurs valeurs numériques correctement déterminées.

8. Méthode selon l'une des revendications 1 à 7, dans laquelle la longueur de la pause est déterminée en mesurant un intervalle de silence entre deux nombres consécutifs.

9. Méthode selon l'une des revendications 1 à 7, comprenant en outre l'obtention d'un point final du premier des deux nombres consécutifs et un point de départ du second des deux nombres consécutifs pendant la reconnaissance vocale automatique et la détermination de la longueur de la pause sur la base du point final et du point de départ.

10. Méthode selon l'une des revendications 1 à 9, comprenant en outre la reconnaissance d'un mot de liaison à l'intérieur de la séquence vocale de nombres.

11. Méthode selon la revendication 10, dans laquelle, à partir de la reconnaissance d'un mot de liaison, la décision de l'appartenance ou de la non-appartenance de deux nombres consécutifs à une valeur numérique unique est basée sur un seuil de longueur de la pause différent.

12. Dispositif (100) d'analyse d'une séquence vocale de nombres comprenant:
- un système de reconnaissance vocale automatique (120);
- une unité prosodique (140) pour déterminer la longueur d'une pause vocale entre deux nombres consécutifs, et
- une unité de traitement (160) pour décider de l'appartenance ou de la non-appartenance des deux nombres consécutifs à une valeur numérique unique sur la base de la longueur déterminée de la pause.

13. Dispositif selon la revendication 12, dans lequel l'unité prosodique (140) détermine un ou plusieurs autres paramètres prosodiques abstraction faite de la longueur de la pause vocale, et dans lequel l'unité de traitement (160) décide de l'appartenance ou de la non-appartenance des deux nombres consécutifs à une valeur numérique unique également sur la base d'un ou de plusieurs autres paramètres prosodiques.

14. Dispositif selon la revendication 12 ou 13, dans lequel le système de reconnaissance vocal automatique (120) reconnaît un mot de liaison entre la séquence vocale de nombres.
